# EUROPÄISCHE PATENTANMELDUNG

(11) **EP 2 130 945 A1**
(43) Veröffentlichungstag der Anmeldung: **09.12.2009**
(21) Anmeldenummer: 08010185.0
(22) Anmeldetag: 04.06.2008
(51) Int. Cl.: C23C 28/00

(54) **Schichtsystem mit TBC und Nobelmetallschutzschicht**

(71) Anmelder: SIEMENS AKTIENGESELLSCHAFT, 80333 München (DE)
(72) Erfinder: Schmitz, Friedhelm, 46537 Dinslaken (DE); Stamm, Werner, Dr., 45481 Mülheim an der Ruhr (DE)

(57) **Zusammenfassung**

Keramische Wärmedämmschichten sind in Gasturbinen bei der Benutzung von Rohölen nicht ausreichend gesichert gegen Korrosion von Vanadium.

Durch die Einführung einer Platin, Niob oder Palladium bzw. niobhaltigen metallischen äußeren Schutzschicht auf der keramischen Wärmedämmschicht wird die Wärmedämmschicht vor korrosivem Abtrag geschützt.

## Beschreibung

Die Erfindung betrifft ein Schichtsystem mit einer keramischen Wärmedämmschicht und mit einer metallischen Schutzschicht aus einem Edelmetall.

Gasturbinen können auch mit Öl oder auch Schwer- oder auch Rohölen befeuert werden.

Vanadium kann in unterschiedlichen Konzentrationen im Rohöl vorkommen. Bei der Raffination wird es im Schweröl angereichert. Bei der Verbrennung entstehen V₂0₅ und V₂0₄, welche in Verbindung mit anderen Verunreinigungen und Oxiden zu sehr niedrig schmelzenden aggressiven Salz-Verbindungen führen, die keramische Wärmedämmschichten (TBC) auflösen. Auch oxidkeramische Werkstoffe wie Yttrium stabilisiertes Zirkondioxid, aber auch neuere Keramiken wie Lanthanzirkonat oder Gadoliniumzirkonat/hafnat, die in Gasturbinen als Wärmedämmschicht verwendet werden, werden aufgeschlossen und destabilisiert. Durch eine Inhibierung des Brennstoffs mit MgO, wie ebenfalls üblich verwendet, lässt sich die Destabilisierung der TBC nicht deutlich begrenzen. Zusätzlich muss die Eintrittstemperatur der Gasturbine begrenzt werden und es entstehen Wirkungsgradverlust durch starke Belagbildung. Es wird daher nach einem Schutzsystem gesucht, das sowohl höhere Eintrittstemperaturen als bisher ermöglicht, d.h. den Einsatz von TBC, als auch die Lebensdauer der TBC unter den beschriebenen Korrosionsbedingungen nicht unzulässig vermindert.

Wie oben beschrieben, wird dem vanadiumhaltigen Brennstoff Mg- Verbindungen als Inhibitor zugefügt, der die Nachteile von Einschränkungen der Eintrittstemperatur und der Abnahme des Wirkungsgrades mit sich bringt. Häufige Betriebsunterbrechungen zum Entfernen der Beläge sind ebenfalls unumgänglich. Diese Aussagen beziehen sich auf reine MCrAlY-Overlayschichten und Grundwerkstoffe. Leider zeigen neuere Versuche, dass das reine Mg0 als auch die Verbindungen mit Vanadiumpentoxid, aber auch Alkalienverbindungen die Keramikschichten im Betrieb angreifen. Es gibt somit zurzeit keine Möglichkeit Wärmedämmschichtsysteme langzeitig unter den beschriebenen Bedingungen zu betreiben.

Es ist daher Aufgabe der Erfindung ein Schichtsystem aufzuzeigen, was oben beschriebene Problematik löst.

Die Aufgabe wird gelöst durch ein Schichtsystem nach Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2: Ausführungsbeispiele der Erfindung,
- Figur 3: eine Gasturbine,
- Figur 4: perspektivisch eine Turbinenschaufel,
- Figur 5: eine Brennkammer und
- Figur 6: eine Liste von Superlegierungen.

Die Figuren und die Beschreibung dazu stellen nur Ausführungsbeispiele der Erfindung dar.

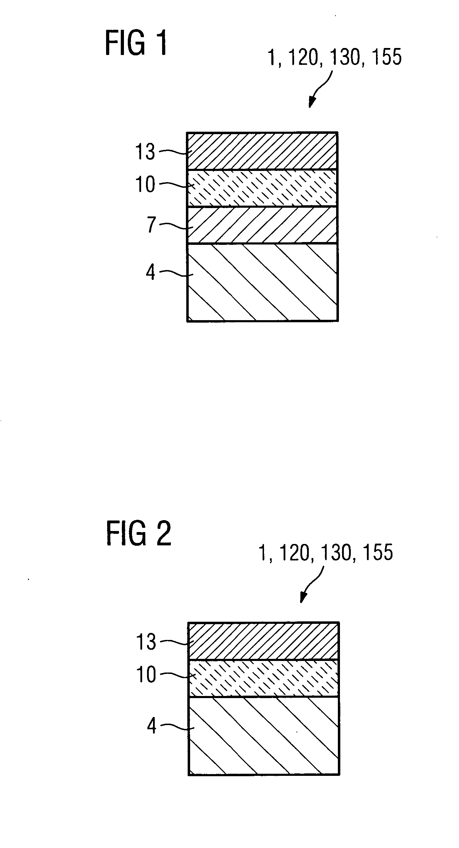

In Figur 1 ist ein Bauteil 1, 120, 130, 155 dargestellt.

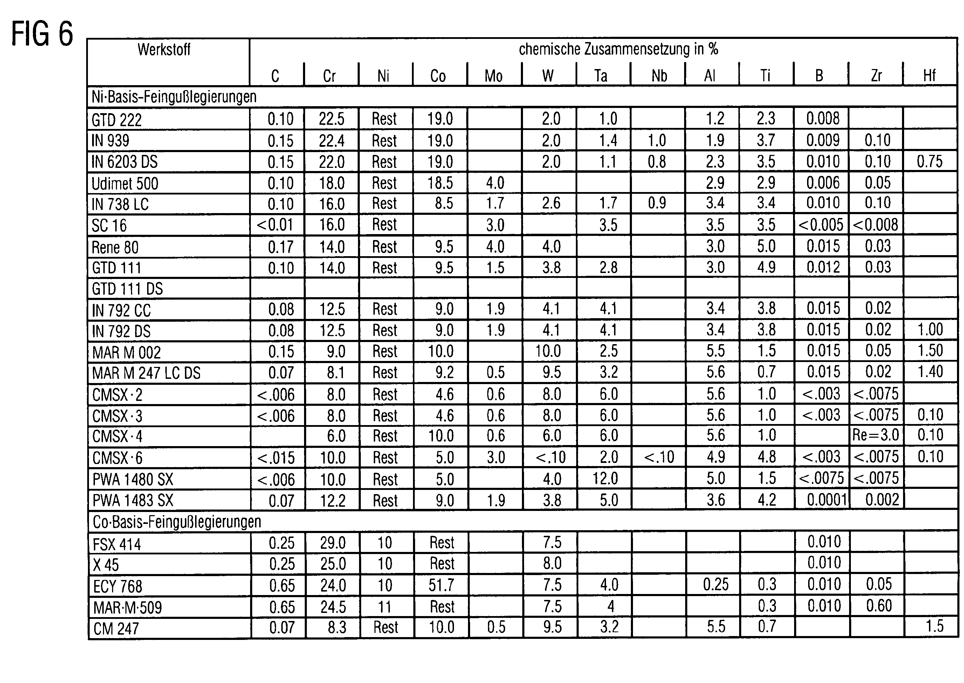

Das Bauteil 1, 120, 130, 155 weist ein Substrat 4 auf. Das Substrat 4 weist insbesondere bei Anwendungen im Hochtemperaturbereich Superlegierungen gemäß Figur 6 auf.

Auf dem Substrat 4 ist vorzugsweise eine metallische Zwischenschicht 7 (Bondcoat) vorhanden, vorzugsweise eine MCrAlX-Schicht auf der eine keramische Wärmedämmschicht 10 (TBC) vorhanden ist.

Als Lösung für die oben beschriebene Problematik wird vorgeschlagen auf der TBC 10 eine zusätzliche äußerste metallische Schicht 13 (top-coat) aufzubringen, die die darunterliegende TBC 10 vor dem Zutritt vor den oben genannten Verbindungen schützt. Als wirksame Schicht wird eine metallische, hochschmelzende Schicht aus Edelmetallen (vorzugsweise Pt, Ir, Ru, Rh), insbesondere aus Platin (Pt), Palladium (Pd), Wolfram (W) und/oder Niob (Nb) mit ebenfalls hoher Resistenz gegen Korrosion verwendet.
Dabei kann eine Schicht aus einzelnen Edelmetallelementen oder Legierungen dieser Edelmetalle untereinander verwendet werden. Legierungen aus Edelmetallen sind dabei vorzugsweise zu verwenden, wie vorzugsweise Pt-Pd oder Pt-Ir, Pt-Pd-Ir oder Legierungen nur innerhalb der Gruppe (Pt, Pd, W, Nb). Vorzugsweise wird Platin (Pt) verwendet, ganz vorzugsweise nur Platin.

Die Schicht 13 ist die äußerste Schicht des Schichtsystems 1, 120, 130, 155 und bei Gasturbinen 100 unmittelbar dem Heißgas ausgesetzt.
Die direkt und unmittelbar dem Heißgas zugewandte Schutzschicht 13 soll je nach Anwendungsfall vorzugsweise eine Schichtdicke von 200µm -300µm aufweisen.

Diese zusätzliche Schicht 13 auf der TBC 10 schützt diese vorzugsweise vor Vanadiumkorrosion, aber auch gegen deren Verbindungen mit Mg0 und Alkalien. Damit können sowohl hohe Eintrittstemperaturen durch die TBC 10 als auch geringere Additivkonzentrationen durch die Schicht 13 realisiert werden. In vielen Fällen kann auch auf eine Additivierung des Brennstoffes völlig verzichtet werden. Zusätzlich können diese Schichten als Erosionsschutz dienen.

Im Unterschied zu Figur 1 ist in Figur 2 keine metallische Zwischenschicht vorhanden, sondern die keramische Wärmedämmschicht 10 ist direkt auf dem Substrat 4 vorhanden.

In Figur 1 kann zwischen metallischer Zwischenschicht 7 und keramischer Wärmedämmschicht 10 und in der Figur 2 zwischen Substrat 4 und keramischer Wärmedämmschicht eine Aluminiumoxidschicht (TGO) vorhanden sein (nicht dargestellt).

Als TBC 10 wird vorzugsweise Zikonoxid oder Gadoliniumhafnat oder Gadoliniumzirkonat verwendet oder eine zweilagige keramische Wärmedämmschicht aus zwei verschiedenen Materialien. Vorzugsweise ist das Zr0₂-Pyrochlor.

Es ist nur eine keramische Schicht 10 vorhanden, also kein Vielfachschichtsystem aus mehreren keramischen Lagen mit mehreren metallischen Schichten dazwischen.
Vorzugsweise ist die Reihenfolge Substrat 4, Haftvermittlerschicht 7 (optional), TGO (ggfs. erst im Einsatz sich bildend), TBC 10, äußerste metallische Schicht 13.
Sowohl die Schicht 7 und TBC 10 können verschiedene Materialien aufweisen (z.B. zweilagig, sind aber zusammenhängend).

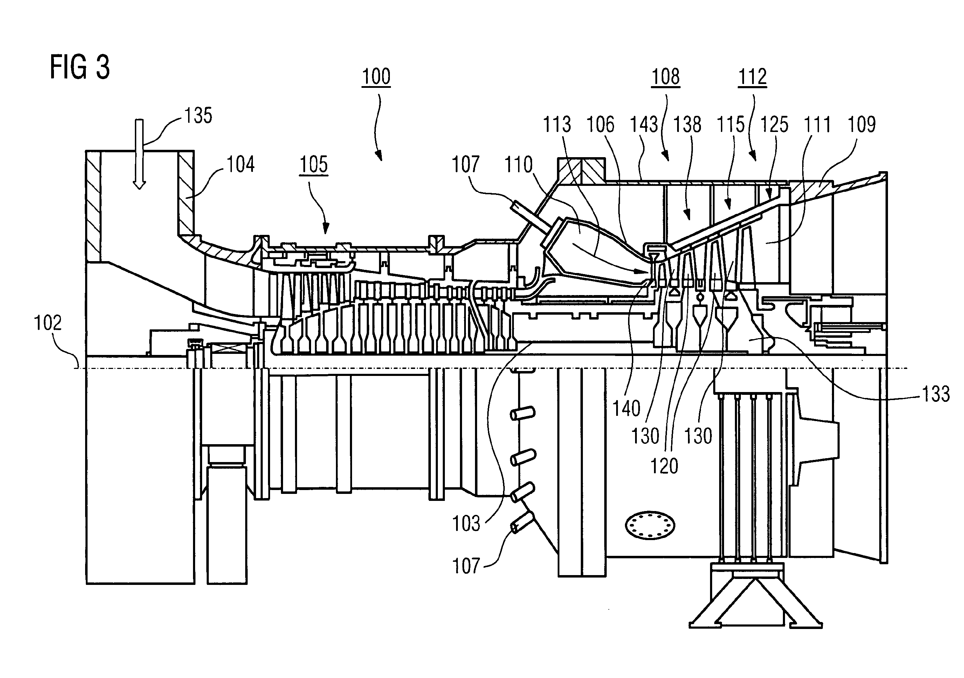

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

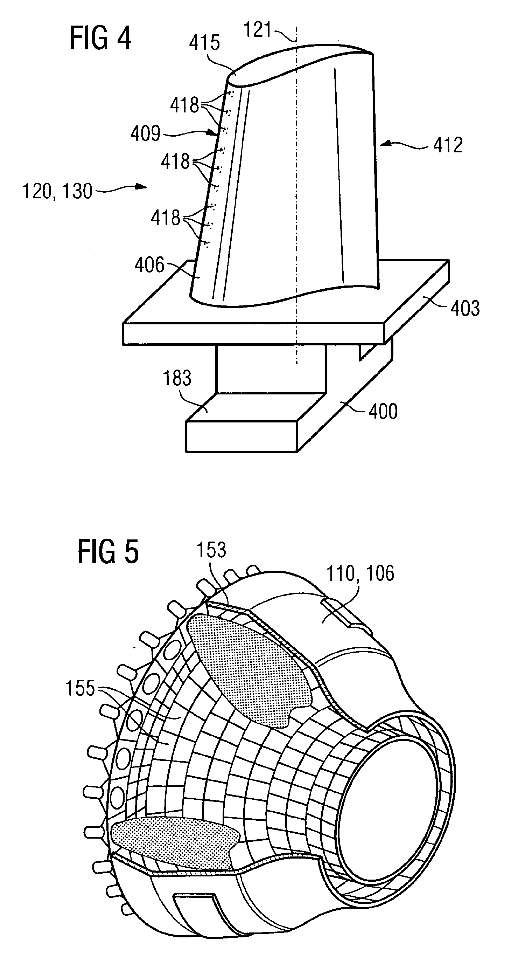

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Schichtsystem (1)
aufweisend
ein Substrat (4),
eine keramische Wärmedämmschicht (10) und
eine äußerste, metallische Schicht (13) auf der keramischen Wärmedämmschicht (10),
die (13) ein Metall ausgewählt aus der Gruppe der Edelmetalle oder sowie Platin (Pt), Palladium (Pd), Wolfram (W) und/oder Niob (Nb) aufweist.

2. Schichtsystem nach Anspruch 1,
bei dem die metallische Schicht (13) ein einziges metallisches Element aufweist,
insbesondere aus einem einzigen metallischen Element besteht.

3. Schichtsystem nach Anspruch 1,
bei dem die metallische Schicht (13) Legierungen der Edelmetalle oder sowie die Metalle Pt, Pd, W und/oder Nb aufweist,
insbesondere daraus besteht.

4. Schichtsystem nach Anspruch 1,
bei dem die metallische Schicht (13) eine Legierung aufweist,
die durch Kombination zweier oder mehrerer Elemente der Gruppe der Edelmetalle oder sowie Pt, Pd, W und/oder Nb gebildet ist.

5. Schichtsystem nach Anspruch 1, 3 oder 4,
bei dem die metallische Schicht (13) aus einer Legierung besteht,
die durch Kombination zweier oder mehrerer Elemente der Gruppe Pt, Pd, W und/oder Nb gebildet ist.

6. Schichtsystem nach Anspruch 1, 2, 3, 4 oder 5,
bei dem die äußerste, metallische Schutzschicht (13) eine Schichtdicke von 200µm - 300µm aufweist.

7. Schichtsystem nach Anspruch 1,
bei dem eine innere metallische Schutzschicht (7) auf dem Substrat (4) und unter der keramischen Wärmedämmschicht (10) vorhanden ist,
insbesondere eine MCrAlX-Schicht (7).

8. Schichtsystem nach Anspruch 1 oder 2,
bei dem die metallische Schicht (13) Platin aufweist, insbesondere aus Platin besteht.

9. Schichtsystem nach Anspruch 1 oder 7,
bei dem die keramische Wärmedämmschicht (10) Zikonoxid aufweist,
insbesondere teilstabilisiertes Zirkonoxid.

10. Schichtsystem nach Anspruch 1 oder 7,
bei dem die keramische Wärmedämmschicht (10) ein Pyrochlor aufweist,
insbesondere ein Gadoliumhafnat oder Gadoliumzirkonat.

11. Schichtsystem nach Anspruch 1, 7, 9 oder 10,
bei dem die keramische Wärmedämmschicht (10) zwei Lagen verschiedener Keramiken aufweist,
insbesondere daraus besteht.

12. Schichtsystem nach Anspruch 1, 2, 3, 4 oder 5,
bei der das Metall für die Schicht (13) Platin (Pt), Palladium (Pd), Wolfram (W) und/oder Niob (Nb) aufweist.

13. Schichtsystem nach Anspruch 1, 7, 9 oder 10,
bei dem nur eine keramische Wärmedämmschicht (10) vorhanden ist.

14. Schichtsystem nach Anspruch 1, 3, 4 oder 5,
bei dem die metallische Schicht (13) eine Platin-Legierung aufweist,
insbesondere daraus besteht.
